# FASCICULE DE BREVET EUROPEEN

(11) **EP 3 858 106 B1**
(45) Date de publication et mention de la délivrance du brevet: **27.08.2025**
(21) Numéro de dépôt: 19790686.0
(22) Date de dépôt: 23.09.2019
(51) Int. Cl.: H05B 3/84

(54) **VITRAGE ANTIGIVRE AYANT UNE PUISSANCE DE CHAUFFAGE DIFFERENCIEE SUR L'ENSEMBLE DE SA SURFACE**
FROSTSCHUTZVERGLASUNG MIT ÜBER DIE GESAMTE OBERFLÄCHE DIFFERENZIERTER HEIZLEISTUNG
ANTI-FROST GLAZING HAVING HEATING POWER DIFFERENTIATED OVER THE ENTIRE SURFACE THEREOF

(30) Priorité: 28.09.2018 FR 1858979
(43) Date de publication de la demande: 04.08.2021
(73) Titulaire: Saint-Gobain Sully, 45600 Sully-sur-Loire (FR)
(72) Inventeur: TONDU, Thomas, 45600 SULLY (FR)
(74) Mandataire: Saint-Gobain Recherche
(86) Numéro de dépôt international: PCT/FR2019/052218
(87) Numéro de publication internationale: WO 2020/065187

(56) Documents cités:
- EP-A2- 0 395 301
- US-A- 3 288 983
- US-A1- 2010 159 251

## Description

L'invention est relative à un vitrage antigivre tel qu'utilisé dans l'aéronautique, la marine ou le ferroviaire notamment.

Les véhicules aériens, aquatiques ou terrestres opérant en conditions givrantes sont équipés de systèmes de chauffage intégrés aux vitrages et permettant de prévenir l'apparition de givre par collection puis givrage de gouttelettes d'eau surfondue. Le chauffage permet de maintenir la température de la peau externe du vitrage au-dessus de 0°C et de maintenir l'eau sous forme liquide. Cette dernière est alors soit chassée par l'écoulement d'air soit évaporée. Le chauffage est obtenu par effet Joule par circulation de courant électrique soit dans une couche conductrice transparente, soit dans des fils suffisamment fins pour ne pas perturber la vision. Les éléments résistifs sont localisés sur la peau interne des vitrages feuilletés la plus proche de la surface externe, c'est-à-dire sur la face interne à la structure feuilletée de la feuille de verre du feuilleté qui est en contact avec l'atmosphère extérieure.

Le document US3288983A décrit un procédé de production d'une puissance de chauffage différenciée sur l'ensemble de la surface d'un vitrage antigivre ou partie de celui-ci, entièrement situé/e, en position de montage, d'un côté du plan de symétrie de la carrosserie d'un véhicule aérien, aquatique ou terrestre, la puissance maximale étant appliquée sur la partie de la surface où la déperdition thermique est maximale, l'enveloppe du vitrage antigivre ou partie de celui-ci étant définie par le quadrilatère ABCD, le segment AB étant tangent au milieu du montant supérieur du vitrage ou de sa partie, le segment BC étant tangent au milieu de son montant arrière, le segment CD étant tangent au milieu de son montant inférieur et le segment DA étant tangent au milieu de son montant avant.

Les règlementations aéronautiques par exemple (notamment CS25 : en anglais « Certification Specification for large airplanes » telles que spécifiées par les autorités aéronautiques européennes EASA pour les gros avions commerciaux, jets d'affaire, avions de ligne, équivalent de la FAR 25 émise par la FAA, autorité des Etats Unis d'Amérique) indiquent qu'une puissance spécifique de chauffage de 7kW/m² permet d'assurer une vision claire en tout temps. Ainsi la pratique courante est d'appliquer cette puissance en visant une homogénéité la plus parfaite possible.

Les pare-brise d'avions, véhicules aquatiques ou terrestres, notamment à grande vitesse, tendent à être de plus en plus grands du fait de la réduction du nombre de vitrages et du fait de l'amélioration des performances aérodynamiques imposant des vitrages de moins en moins verticaux. L'ouverture angulaire étant imposée, cela induit un accroissement de la surface des vitrages. La puissance électrique allouée aux vitrages est par conséquent croissante et peut dans certaines conditions de vol être le premier poste de consommation électrique.

Réduire la puissance électrique consommée par les vitrages peut permettre de réduire la masse des systèmes de génération électrique et de secours électrique, ainsi que la consommation en kérosène ou tout autre carburant.

A cette fin, l'invention a pour objet un procédé de production d'une puissance de chauffage différenciée sur l'ensemble de la surface d'un vitrage antigivre ou partie de celui-ci selon la revendication 1. L'invention a également pour objet un véhicule aérien, aquatique ou terrestre selon la revendication 7.

L'invention procure un chauffage volontairement hétérogène et, par conséquent, une possibilité de réduire l'énergie pour le dégivrage et d'alléger les moyens de génération électrique. On peut ainsi obtenir une baisse de puissance jusqu'à environ 30% par rapport à un vitrage intégralement chauffé à 7kW/m² ; les surfaces non chauffées (effets de bord) ne sont pas prises en compte dans le calcul des puissances moyennes; cette définition n'exclut pas une éventuelle courbure du vitrage antigivre : si les tangentes ne sont pas coplanaires - sécantes, elles doivent être projetées orthogonalement sur un plan perpendiculaire à la normale au vitrage (ou à sa partie - moitié), en son barycentre.

Pour simplifier, on ne considère un vitrage ou bien une partie de celui-ci que d'un seul côté du plan de symétrie du véhicule. Mais bien entendu, l'invention concerne l'ensemble des vitrages antigivre de celui-ci. Les vitrages d'un véhicule peuvent ne pas être disposés symétriquement, c'est-à-dire ne pas être l'image l'un de l'autre deux à deux par rapport au plan de symétrie de la carrosserie ; mais ils le sont en général. Ainsi dans ce cas de disposition symétrique des vitrages par exemple, un cockpit d'avion peut avoir un, deux ou trois vitrages à fonction antigivre. La définition générale de l'invention ne concerne alors, pour raison de symétrie, qu'une moitié du vitrage frontal, respectivement qu'un des deux vitrages latéraux, respectivement qu'une moitié du vitrage frontal et celui des deux vitrages latéraux disposé du même côté du plan de symétrie de la carrosserie.

Selon des caractéristiques préférées
- ladite partie de la surface où la déperdition thermique est maximale est la partie basse du vitrage qui est soumise à plus de collection d'eau que le reste du vitrage ; cette collection plus importante induit un besoin supérieur de puissance pour réchauffer l'eau au-dessus de zéro degré Celsius et plus de puissance requise par son évaporation ;
- la puissance de chauffage différenciée est obtenue par dépôt d'une couche électroconductrice transparente d'épaisseur hétérogène permettant de moduler la puissance dissipée ;
- le vitrage antigivre ou partie de celui-ci comprend une couche électroconductrice transparente de laquelle des lignes fines de séparation de flux ont été retirées par ablation, de manière à aider à maîtriser la répartition de puissance de chauffage différenciée ; ces lignes de séparation de flux, souvent appelées lignes de flux, sont obtenues par ablation laser principalement ; elles sont décrites dans les demandes WO 2017/001792 A1, FR 2 888 082 A1, EP 0 893 938 A1 et WO 2018/109364 A1 et ont pour fonction de guider le courant électrique, voire dans certains cas d'isoler certaines zones non passantes au moyen de lignes fermées sur elles-mêmes ;
- la couche électroconductrice transparente comprend au moins un oxyde conducteur transparent tel qu'oxyde d'indium dopé à l'étain (en anglais Indium Tin Oxide - ITO -), oxyde d'étain dopé au fluor SnO₂: F et/ou au moins un métal tel que l'argent, notamment sous forme d'un empilement multicouche à l'argent ;
- le vitrage antigivre ou partie de celui-ci consiste en un vitrage feuilleté dont la face interne à la structure feuilletée de la feuille de verre du feuilleté qui, en position de montage, est en contact avec l'atmosphère extérieure, porte des éléments électroconducteurs résistifs ; il peut s'agir d'une couche électroconductrice transparente et/ou d'un réseau de fils chauffants ; les feuilles constituant le vitrage feuilleté peuvent être en verre minéral, tel que sodocalcique éventuellement trempé thermique, aluminosilicate éventuellement trempé chimique, ou autre, ou bien organiques du type poly(méthacrylate de méthyle) (PMMA), polycarbonate (PC), résine ionomère et reliées les unes aux autres par l'intermédiaire d'une couche adhésive intercalaire du type polyvinylbutyral (PVB), polyuréthane (PU), ethylène - acétate de vinyle (EVA) par exemple ; le vitrage feuilleté peut être d'une structure procurant une résistance ballistique, présenter des fonctions écran aux radiations électromagnétiques, antistatiques de dissipation/évacuation des charges électrostatiques, ses surfaces extérieures peuvent être hydrophiles, hydrophobes, anti-salissures - photocatalytiques.

L'invention sera mieux comprise à la lumière de la description suivante des dessins annexés dans lesquels
- la Figure 1 représente le quadrilatère caractéristique d'une moitié de vitrage antigivre, et la délimitation de zones conformément à une réalisation particulière de l'invention, et
- la Figure 2 représente un quadrilatère analogue à celui de la Figure 1, auquel on a superposé les zones de différentes puissances spécifiques moyennes de chauffage.

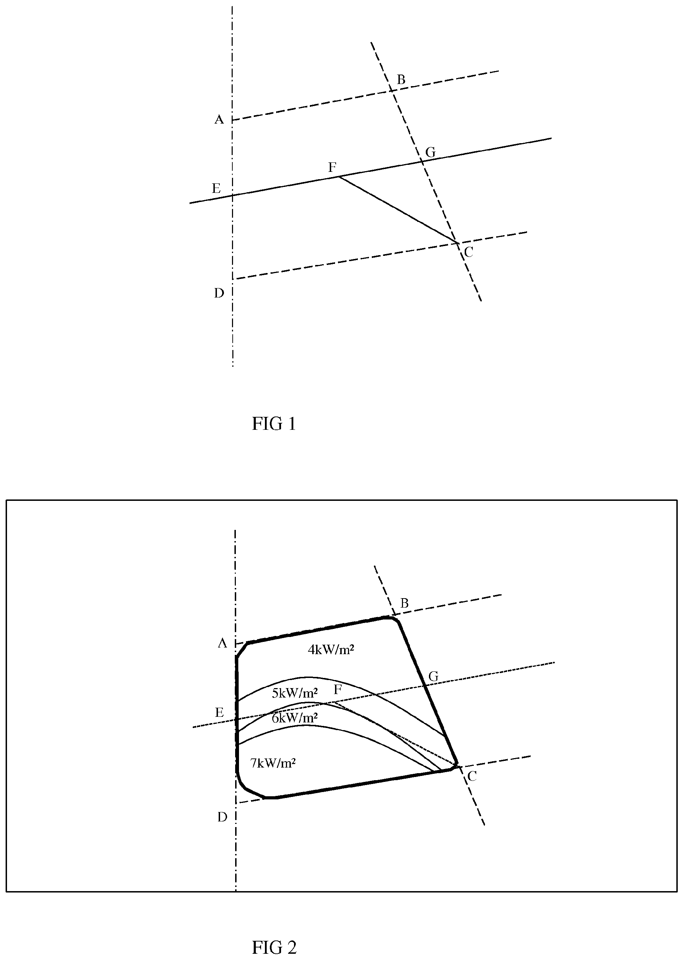

En référence à la Figure 1, un vitrage frontal de cockpit d'avion est centré par rapport à la carlingue de l'avion, c'est-à-dire par rapport au plan de symétrie de celle-ci. Par raison de symétrie, il nous suffit ici de ne représenter que la moitié droite, vue face à l'avion en position de montage, du pare-brise frontal, moitié disposée du seul côté droit du plan de symétrie de la carlingue. Ce cockpit peut par ailleurs comporter deux pare-brise latéraux de part et d'autre du frontal.

Le pare-brise frontal a une fonction antigivre au moyen d'une couche électroconductrice transparente portée par la face orientée vers l'intérieur de la structure feuilletée de la feuille de verre en contact avec l'atmosphère extérieure.

L'enveloppe de cette moitié droite du pare-brise frontal est définie par le quadrilatère ABCD, AB étant la tangente au milieu du montant supérieur de la moitié droite du vitrage, BC la tangente au milieu de son montant arrière, CD la tangente au milieu de son montant inférieur et DA la tangente au milieu de son montant avant, qui est ici inclus dans le plan de symétrie de la carlingue. E et G sont les milieux des segments DA, respectivement BC, et F est un point quelconque sur le segment EG.

En référence à la Figure 2, conformément à l'invention, les puissances spécifiques moyennes de chauffage sont bien de 7, respectivement 4, respectivement 4, chacune à +/- 1 kW/m² près, dans les surfaces délimitées par les points CDEF, respectivement ABGE, respectivement CFG.

## Revendications

1. Procédé de production d'une puissance de chauffage différenciée sur l'ensemble de la surface d'un vitrage antigivre ou partie de celui-ci, entièrement situé/e, en position de montage, d'un côté du plan de symétrie de la carrosserie d'un véhicule aérien, aquatique ou terrestre, la puissance maximale étant appliquée sur la partie de la surface où la déperdition thermique est maximale, l'enveloppe du vitrage antigivre ou partie de celui-ci étant définie par le quadrilatère ABCD, le segment AB étant tangent au milieu du montant supérieur du vitrage ou de sa partie, le segment BC étant tangent au milieu de son montant arrière, le segment CD étant tangent au milieu de son montant inférieur et le segment DA étant tangent au milieu de son montant avant, éventuellement inclus dans le plan de symétrie de la carrosserie du véhicule, E et G étant les milieux des segments DA, respectivement BC, F étant un point quelconque sur le segment EG, les puissances spécifiques moyennes de chauffage étant de 7 kW/m² à +/-1 kW/m² près, dans la surface délimitée par les points CDEF, 4 kW/m² à +/- 1 kW/m² près, dans la surface délimitée par les points ABGE, et 4 kW/m² à +/- 1 kW/m² près, dans la surface délimitée par les points CFG.

2. Procédé selon la revendication 1, **caractérisé en ce que** ladite partie de la surface où la déperdition thermique est maximale est la partie basse du vitrage qui est soumise à plus de collection d'eau que le reste du vitrage.

3. Procédé selon l'une des revendications précédentes, **caractérisé en ce que** la puissance de chauffage différenciée est obtenue par dépôt d'une couche électroconductrice transparente d'épaisseur hétérogène permettant de moduler la puissance dissipée.

4. Procédé selon l'une des revendications précédentes, **caractérisé en ce que** le vitrage antigivre ou la partie de celui-ci comprend une couche électroconductrice transparente de laquelle des lignes fines de séparation de flux ont été retirées par ablation, de manière à aider à maîtriser la répartition de puissance de chauffage différenciée.

5. Procédé selon la revendication 3 ou 4, **caractérisé en ce que** la couche électroconductrice transparente comprend au moins un oxyde conducteur transparent tel qu'oxyde d'indium dopé à l'étain, oxyde d'étain dopé au fluor SnO₂:F et/ou au moins un métal tel que l'argent.

6. Procédé selon l'une des revendications précédentes, **caractérisé en ce que** le vitrage antigivre ou la partie de celui-ci consiste en un vitrage feuilleté dont la face interne à la structure feuilletée de la feuille de verre du feuilleté qui, en position de montage, est en contact avec l'atmosphère extérieure, porte des éléments électroconducteurs résistifs.

7. Véhicule aérien, aquatique ou terrestre comprenant un vitrage antigivre ou partie de celui-ci, entièrement situé/e d'un côté du plan de symétrie de la carrosserie du véhicule aérien, aquatique ou terrestre, la puissance de chauffage étant différenciée sur l'ensemble de sa surface, de façon à appliquer la puissance maximale sur la partie de la surface où la déperdition thermique est maximale, l'enveloppe du vitrage antigivre ou partie de celui-ci étant définie par le quadrilatère ABCD, le segment AB étant tangent au milieu du montant supérieur du vitrage ou de sa partie, le segment BC étant tangent au milieu de son montant arrière, le segment CD étant tangent au milieu de son montant inférieur et le segment DA étant tangent au milieu de son montant avant, éventuellement inclus dans le plan de symétrie de la carrosserie du véhicule, E et G étant les milieux des segments DA, respectivement BC, F étant un point quelconque sur le segment EG, **caractérisé en ce que** les puissances spécifiques moyennes de chauffage sont de 7 kW/m2 à +/-1 kW/ m2 près, dans la surface délimitée par les points CDEF, 4 kW/m2 à +/- 1 kW/m2 près, dans la surface délimitée par les points ABGE, et 4 kW/m2 à +/- 1 kW/m2 près, dans la surface délimitée par les points CFG.

## Patentansprüche

1. Verfahren zur Erzeugung einer differenzierten Heizleistung über die gesamte Oberfläche einer Frostschutzverglasung oder eines Teils davon, die sich in Einbaulage vollständig auf einer Seite der Symmetrieebene der Karosserie eines Luft-, Wasser- oder Landfahrzeugs befindet, wobei die maximale Leistung auf den Teil der Oberfläche angewendet wird, auf dem der Wärmeverlust am größten ist, wobei die Einhüllende der Frostschutzverglasung oder eines Teils davon durch das Viereck ABCD definiert ist, wobei das Segment AB die Mitte der oberen Strebe der Verglasung oder des Teils davon tangiert, das Segment BC die Mitte ihrer hinteren Strebe tangiert, das Segment CD die Mitte ihrer unteren Strebe tangiert und das Segment DA die Mitte ihrer vorderen Strebe tangiert, die gegebenenfalls in der Symmetrieebene der Fahrzeugkarosserie eingeschlossen ist, wobei E und G die Mitten jeweils der Segmente DA und BC sind, F ein beliebiger Punkt auf dem Segment EG ist, wobei die durchschnittlichen spezifischen Heizleistungen in dem durch die Punkte CDEF abgegrenzten Bereich 7 kW/m² +/- 1 kW/m², in dem durch die Punkte ABGE abgegrenzten Bereich 4 kW/m² +/- 1 kW/m², und in dem durch die Punkte CFG abgegrenzten Bereich 4 kW/m² +/- 1 kW/m² betragen.

2. Verfahren nach Anspruch 1, **dadurch gekennzeichnet, dass** der Teil der Oberfläche, auf dem der Wärmeverlust am größten ist, der untere Teil der Verglasung ist, auf dem sich mehr Wasser ansammelt als auf dem Rest der Verglasung.

3. Verfahren nach einem der vorstehenden Ansprüche,
**dadurch gekennzeichnet, dass** die differenzierte Heizleistung durch die Abscheidung einer transparenten, elektrisch leitenden Schicht unterschiedlicher Dicke erreicht wird, wodurch die Verlustleistung moduliert werden kann.

4. Verfahren nach einem der vorstehenden Ansprüche,
**dadurch gekennzeichnet, dass** die Frostschutzverglasung oder Teile davon eine transparente, elektrisch leitfähige Schicht umfassen, aus der durch Ablation feine Strömungstrennlinien entfernt wurden, um die differenzierte Heizleistungsverteilung steuern zu können.

5. Verfahren nach Anspruch 3 oder 4, **dadurch gekennzeichnet, dass** die transparente, elektrisch leitfähige Schicht mindestens ein transparentes, leitfähiges Oxid, beispielsweise zinndotiertes Indiumoxid oder fluordotiertes Zinnoxid SnO₂:F und/oder mindestens ein Metall wie Silber umfasst.

6. Verfahren nach einem der vorstehenden Ansprüche,
**dadurch gekennzeichnet, dass** die Frostschutzverglasung oder der Teil davon aus einer Verbundverglasung besteht, deren Innenseite der Verbundstruktur der Verbundglasscheibe, die in der Einbaulage mit der Außenatmosphäre in Kontakt steht, elektrisch leitfähige Widerstandselemente trägt.

7. Luft-, Wasser- oder Landfahrzeug umfassend eine Frostschutzverglasung oder einen Teil davon, die sich vollständig auf einer Seite der Symmetrieebene der Karosserie des Luft-, Wasser- oder Landfahrzeugs befindet, wobei die Heizleistung über die gesamte Oberfläche differenziert ist, um die maximale Leistung auf den Teil der Oberfläche anzuwenden, auf dem der Wärmeverlust am größten ist, wobei die Einhüllende der Frostschutzverglasung oder des Teils davon durch das Viereck ABCD definiert ist, wobei das Segment AB die Mitte der oberen Strebe der Verglasung oder des Teils davon tangiert, das Segment BC die Mitte ihrer hinteren Strebe tangiert, das Segment CD die Mitte ihrer unteren Strebe tangiert und das Segment DA die Mitte ihrer vorderen Strebe tangiert, die gegebenenfalls in der Symmetrieebene der Fahrzeugkarosserie eingeschlossen ist, wobei E und G die Mitten jeweils der Segmente DA und BC sind und F ein beliebiger Punkt auf dem Segment EG ist, **dadurch gekennzeichnet, dass** die mittleren spezifischen Heizleistungen in dem durch die Punkte CDEF abgegrenzten Bereich 7 kW/m² +/- 1 kW/m², in dem durch die Punkte ABGE abgegrenzten Bereich 4 kW/m² +/- 1 kW/m² und in dem durch die Punkte CFG abgegrenzten Bereich 4 kW/m² +/- 1 kW/m² betragen.

## Claims

1. A method of producing a differentiated heating power over the whole surface of an anti-icing glazing or a portion thereof, located entirely, in the mounted position, on one side of the plane of symmetry of the body of an airborne, waterborne or terrestrial vehicle, the maximum power being applied to the portion of the surface where the heat loss is greatest, the envelope of the anti-icing glazing or a portion thereof being defined by the quadrilateral ABCD, the segment AB being the tangent to the middle of the upper post of the glazing or the portion thereof, the segment BC being the tangent to the middle of the rear post thereof, the segment CD being the tangent to the middle of the lower post thereof and the segment DA being the tangent to the middle of the front post thereof, optionally included in the plane of symmetry of the body of the vehicle, E and G being the middles of the segments DA and BC, respectively, F being any point on the segment EG, the mean specific heating powers being 7 kW/m² to within +/- 1 kW/m², in the surface area delimited by the points CDEF, 4 kW/m² to within +/- 1 kW/m², in the surface area delimited by the points ABGE, and 4 kW/m² to within +/- 1 kW/m², in the surface area delimited by the points CFG.

2. The method according to claim 1, **characterized in that** said portion of the surface where heat loss is greatest is the lower portion of the glazing which is subject to more water collection than the rest of the glazing.

3. The method according to one of the preceding claims,
**characterized in that** the differentiated heating power is obtained by depositing a transparent electrically conductive layer of heterogeneous thickness enabling the dissipated power to be modulated.

4. The method according to one of the preceding claims,
**characterized in that** the anti-icing glazing or a portion thereof comprises a transparent electrically conductive layer from which fine flow-separating lines have been removed by ablation, so as to help control the distribution of differentiated heating power.

5. The method according to claim 3 or 4, **characterized in that** the transparent electrically conductive layer comprises at least one transparent conductive oxide such as tin-doped indium oxide, fluorine-doped tin oxide SnO₂:F and/or at least one metal such as silver.

6. The method according to one of the preceding claims,
**characterized in that** the anti-icing glazing or a portion thereof consists of a laminated glazing whose face internal to the laminated structure of the glass sheet of the laminate which, in the mounted position, is in contact with the outside atmosphere, carries resistive electrically conductive elements.

7. An airborne, waterborne or terrestrial vehicle comprising an anti-icing glazing or a portion thereof, located entirely on one side of the plane of symmetry of the body of the airborne, waterborne or terrestrial vehicle, the heating power being differentiated over the whole surface thereof, so as to apply the maximum power to the portion of the surface where the heat loss is greatest, the envelope of the anti-icing glazing or a portion thereof being defined by the quadrilateral ABCD, the segment AB being the tangent to the middle of the upper post of the glazing or the portion thereof, the segment BC being the tangent to the middle of the rear post thereof, the segment CD being the tangent to the middle of the lower post thereof and the segment DA being the tangent to the middle of the front post thereof, optionally included in the plane of symmetry of the body of the vehicle, E and G being the middles of the segments DA and BC, respectively, F being any point on the segment EG, **characterized in that** the mean specific heating powers are 7 kW/m2 to within +/- 1 kW/m2 in the surface area delimited by the points CDEF, 4 kW/m2 to within +/- 1 kW/m2 in the surface area delimited by the points ABGE, and 4 kW/m2 to within +/- 1 kW/m2 in the surface area delimited by the points CFG.
